# Europäisches Patentamt
# European Patent Office
# Office européen des brevets

(19)

(11) Publication number: **0 016 836 B1**

(12) **EUROPEAN PATENT SPECIFICATION**

(45) Date of publication of patent specification: **27.07.83**

(51) Int. Cl.³: **B 29 D 27/02**

(21) Application number: **79900272.0**

(22) Date of filing: **07.03.79**

(86) International application number:
**PCT/JP79/00054**

(87) International publication number:
**WO 79/00734 04.10.79 Gazette 79/20**

(54) **METHOD AND APPARATUS FOR SPRAYING MATERIAL ONTO A MOVING RECEIVING SURFACE.**

(30) Priority: **10.03.78 JP 26633/78**
**09.09.78 JP 110223/78**

(43) Date of publication of application:
**15.10.80 Bulletin 80/21**

(45) Publication of the grant of the patent:
**27.07.83 Bulletin 83/30**

(84) Designated Contracting States:
**DE FR GB**

(56) References cited:
**DE - A - 1 427 635**
**JP - B - 47 015 237**
**JP - Y - 46 023 332**
**JP - Y - 50 004 775**
**US - A - 3 924 562**
**US - A - 3 932 980**
**US - A - 3 960 108**

(73) Proprietor: **ASAHI GLASS COMPANY LTD.**
**No. 1-2, Marunouchi 2-chome**
**Chiyoda-ku, Tokyo (JP)**

(73) Proprietor: **BABA SEISAKUSHO CO., LTD.**
**750, Oaza Tsunoe, Yame-shi**
**Fukuoka 834 (JP)**

(72) Inventor: **BABA, Morimitsu**
**753-2, Oaza Tsunoe**
**Yame-shi, Fukuoka 834 (JP)**

(74) Representative: **Wächtershäuser, Günter, Dr.**
**Tal 29**
**D-8000 München 2 (DE)**

Courier Press, Leamington Spa, England

# A method and apparatus for spraying material onto a moving receiving surface

The present invention relates to a method of spraying material onto a moving receiving surface via a moving intermediate surface. Further the present invention relates to an apparatus for spraying material onto a moving receiving surface comprising a pair of spreading rolls, which are arranged in parallel and with a gap and with their facing surfaces rotating downwardly; a device for feeding the material onto the spreading rolls and a pair of scattering rolls which are located below the spreading rolls and rotatable in contact with the spreading rolls.

US—A—3932980 describes an apparatus for spreading a molding composition on a moving surface via an intermediate surface (mixing rolls), the spreading being effected in part by removal rolls in contact with the mixing rolls. Significantly different residence times and composition temperatures would arise with this known apparatus compared with that of the present invention.

Polyurethane foam is prepared by foaming and setting a foamable composition comprising main components of an active hydrogen compound having at least two active hydrogen atoms and an isocyanate compound having at least two isocyanate groups. The foamable composition can comprise a blowing agent, a catalyst, a foam regulator etc. together with the two main components. Sometimes, it further comprises additional components such as flameproofing agent, coloring agent, stabilizer, filler etc.

The foamable composition usually begins to foam within at least several tens seconds after the blending and completes the foaming within several minutes to ten and several minutes after the blending.

Tackiness of the surface is lost when the setting is completed a certain time after completion of the foaming.

The period of time from the completion of the blending to the time just before blowing a white creamy liquid of the foamable composition in the initiation stage of foaming is called cream time. The period of time from blowing the creamy liquid to grow a foam and to complete the blowing is called rise time. The period of time for setting the surface of the foam after the rise is called set time.

It is relatively difficult to form a uniform thin foamable composition layer by spreading a foamable composition obtained by mixing components from a feeding outlet to a surface which is moved relative to the feeding outlet.

Such receiving surfaces include a slab belt surface, a mold inner wall and a plate surface. The feeding outlet of a mixer is usually in the form of holes. Therefore, the foamable composition is placed in the form of strips on the surface. In the conventional slab formation of a soft polyurethane foam, such a process has been employed. Since the foamable composition has a low viscosity, the foamable composition is spread on the surface of the slab belt by its dead weight and the three-dimensional blowing is resulted and the foamable composition is expanded to required width since the blowing rate is large. When the width of the slab belt is large, the feeding outlet is reciprocated in the transversal direction of the slab belt so as to place the foamable composition in zigzag on the surface of the slab belt. It is difficult to employ said method if the foamable composition for a hard polyurethane foam has a high viscosity or if the foamable composition should be placed in small thickness for forming a thin polyurethane foam or if the blowing rate of the foamable composition is low.

A method for distributing a foamable composition onto an entire surface which is moved relative to a linear feeding outlet for the foamable composition arranged in a perpendicular direction to the moving direction of the relative movement has been known. For example, in U.S. Patent No. 3,927,162, a method for feeding a foamable composition onto a whole inner surface of a moving mold from a sector feeding outlet is described. However, in order to discharge the foamable composition uniformly from all parts of the linear feeding outlet, a high pressure is required.

When the pressure is too low, a discharge from the end of the feeding outlet is difficult. When the width of the feeding outlet is narrower the feeding rate of the foamable composition is reduced and clogging of the foamable composition is easily caused. Therefore, it is difficult to obtain a uniform feeding. The foamable composition is foamed and set in a short time, whereby the clogging of the feeding outlet is caused by the foamable composition set near the linear feeding outlet and the uniform feeding of the foamable composition from all positions of the linear feeding outlet is difficult. This phenomenon is especially severe when the width of the feeding outlet is narrow and the feeding rate of the foamable composition is low.

A method for spraying a foamable composition has been known even though the particles of the foamable composition are spread, the sprayed composition is placed in a circular form. Therefore, even though the surface is relatively moved, the foamable composition is placed in a broad linear form. Even though the spray nozzle is reciprocated in the transversal direction onto the moving surface to overlap the edges of the broad linear form of the foamable composition, it is difficult to obtain a uniform quantity of the foamable composition at the place of overlapping and at the place of nonoverlapping. Moreover, in order to spray a foamable composition, a compressing means such as use of compressed air is required. The spraying of a foamable composition having high viscosity is difficult and vaporization of toxic isocyanate compound having low boiling point is easily caused.

It has been particularly difficult to form a thin foamable composition layer onto a surface for obtaining a thin polyurethane foam layer. Heretofore, a method for bonding sheets obtained by slicing a block of a polyurethane foam which is foamed and set, has been widely employed. However, the slicing and bonding of sliced sheets of polyurethane foam are complicated. A method for spread-coating a foamable composition after placing it on a surface has not been easy since the foaming and setting of the foamable composition are speedy. When the position of the moving surface is varied, for example, the surface is a waved surface, it has been difficult to uniformly spread-coat the foamable composition in thin thickness. A method for preparing a thin broad sheet by foaming and setting a foamable composition in a sealed mold has been difficult. The blowing pressure is usually not sufficient to fill all corners of the mold.

Therefore, it is a problem of the present invention to provide a process and an apparatus for preparing a polyurethane foam layer by spreading a foaming composition onto a moving surface, whereby a uniform polyurethane layer is obtained regardless of the width and thickness of the desired layer, regardless of the shape of the moving surface, which might notably be waved and regardless of the viscosity of the foamable composition.

This problem is solved by a method of spraying material onto a moving receiving surface via a moving intermediate surface, whereby the material is a foamable composition for forming a polyurethane foam, which is spread through a reciprocating nozzle onto the moving intermediate surface and thereafter, while still being foamable, removed from the intermediate surface and scattered onto the receiving surface by a brush throwing action.

This method provides a high quality polyurethane foam layer which is extremely uniform even though the layer may be thin and rather wide. If the receiving surface is waved, a uniform layer is obtained on the top areas, the bottom areas and the slanted areas of the waved surface. The excellent results of the invention are independent of the viscosity of the foamable composition.

The first surface is preferably a surface of a rotary roll. The step for scattering the foamable composition as fine particles from the first surface to the second surface, is preferably a process for scattering it under centrifugal force by a rotary roll having a fiber layer on its surface. The rotary roll for the first surface is called spreading roll and the rotary roll having fiber layer is called scattering roll. The present invention will be illustrated referring to the drawings.

Brief Description of the Drawings

Figure 1 is a schematic view of a first embodiment of the present invention;

Figure 2 is a partial side view of the first embodiment;

Figure 3 is a side view of a second embodiment of the present invention which is further improved.

Description of the Preferred Embodiments of the Invention

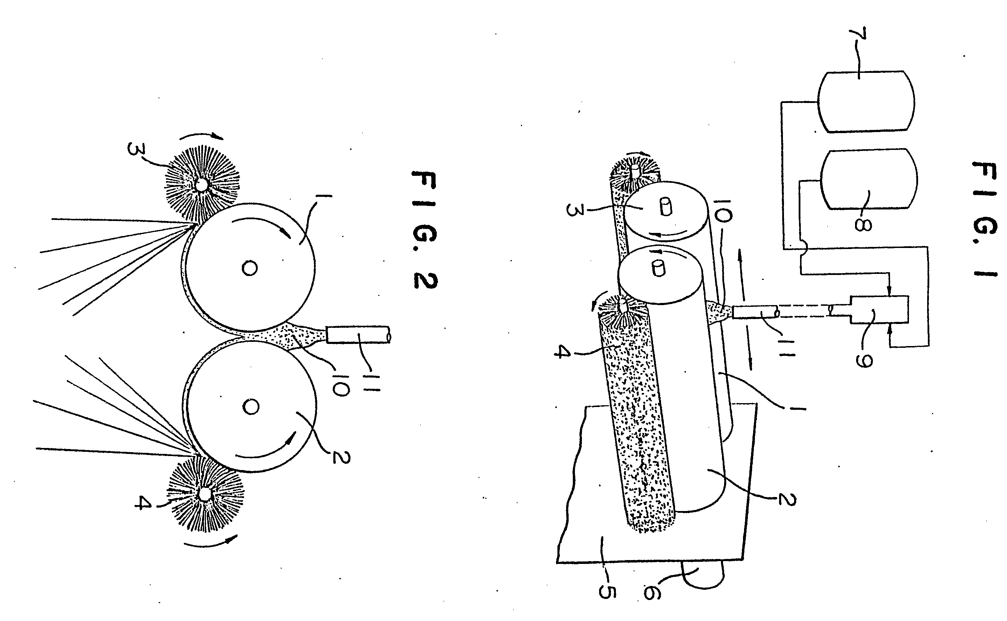

Figure 1 is a schematic view of the first embodiment of the present invention. Figure 2 is a partial side view of said embodiment.

The spreading apparatus comprises two spreading rolls (1), (2) and two scattering rolls (3), (4) which are fitted on side frames (5).

The frame in the front is not shown so as to show the side surfaces of the rolls. The rolls are driven by a driving device (6) such as one or more electric motors. The two spreading rolls (1), (2) are rotated in opposite directions as shown in the drawings. The facing surfaces of the two spreading rolls (1), (2) are rotated so as to move downwardly. The two scattering rolls (3), (4) are rotated to the direction corresponding to the movement of the spreading rolls (1), (2).

The foamable composition is prepared by mixing an aromatic diisocyanate such as TDI and MDI with a polyether-polyol containing a catalyst, a blowing agent and a foam regulating agent.

The aromatic diisocyanate is fed from a tank (7) and the polyetherpolyol is fed from a tank (8) to a blending extruder (9) wherein the components are mixed. The resulting foamable composition (10) is fed through the nozzle (11) of the feeding outlet connected to the blending extruder (9), onto the surfaces of the two spreading rolls (1), (2).

In order to uniformly feed the foamable composition onto the spreading rolls (1), (2) in their longitudinal direction, it is necessary to reciprocate the nozzle (11) above the spreading rolls (1), (2) as shown in the drawings in their longitudinal direction. The foamable composition (10) discharged from the nozzle (11) is spread on the spreading rolls (1), (2) through a gap between the pair of the spreading rolls (1), (2). The foamable composition is uniformly fed onto the spreading rolls (1), (2) in a periodic manner. The foamable composition passed through the gap between the spreading rolls (1), (2) is scattered in the form of fine particles from the bottom of the scattering rolls (3), (4). The scattering rolls (3), (4), are brush rolls having many fine metallic filaments extending in radial direction.

The scattering rolls (3), (4) are rotated in contact with the spreading rolls (1), (2) at high speed. Therefore, the foamable composition (10) on the spreading rolls (1), (2) is peeled off from the surfaces of the spreading rolls by the scattering rolls (3), (4) and is scattered as fine particles by centrifugal force by the scattering rolls (3), (4).

The fine particles of the foamable composition fall downward at a speed given by the centrifugal force and the dead weight. However, the fine particles may float in air by the air resistance. Therefore, a part of the scattered fine particles will fall linearly. However, some of the particles float as mist in air and fall at relatively low velocity. The foamable composition is uniformly distributed in the longitudinal direction of the spreading rolls (1), (2) due to the presence of the fine particles of the scattered foamable composition falling at relatively low speed and due to the reciprocal movement of the nozzle (9).

Below the spreading apparatus, there is a receiving surface onto which the scattered particles are deposited while being spread perpendicular to the longitudinal direction of the spreading rolls (1), (2) i.e. to the right and left in Figure 2. Also the foamable composition is uniformly scattered in the transversal direction whereby a uniform foamable composition layer is formed.

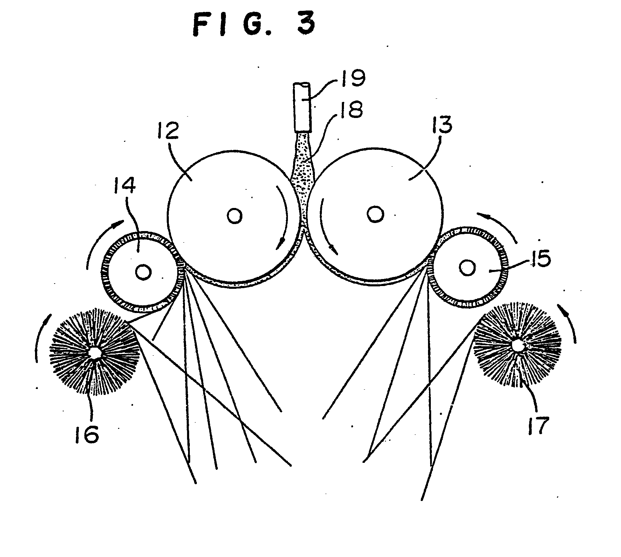

Figure 3 is a side view of an improved apparatus which is suitable for scattering a foamable composition having a relatively high viscosity such as a foamable composition which forms a hard polyurethane foam.

The first improved feature is to employ scattering rolls having a fibrous layer which has a relatively thin thickness and which is dense.

The second improved feature is to employ auxiliary scattering rolls which are rotated below the scattering rolls without contacting the scattering rolls. The second improved feature is not always necessary and sometimes, it is not employed.

The spreading apparatus is similar to the apparatus of Figure 2 and comprises two spreading rolls (12), (13) which are located in parallel with a gap; two scattering rolls (14), (15) which rotate contact respectively with the lower outer sides of the spreading rolls; and two auxiliary scattering rolls (16), (17) which are rotated below the scattering rolls without contacting them.

The rotary directions of the rolls are shown in the drawings.

As shown in Figure 3, the foamable composition (18) is fed through a nozzle (19) onto the spreading rolls (12), (13) and then, it is scattered by the scattering rolls (14), (15). a part of the scattered foamable composition is scattered again by the auxiliary scattering rolls (16), (17).

As the scattering rolls (3), (4) in Figures 1 and 2, brush rolls are used having many filaments of a metallic fiber, a synthetic fiber or a natural fiber in the radial direction. The brush rolls effectively scatter the foamable composition by their centrifugal force and their repulsive force caused by being bent by contact with the spreading rolls. However, when a foamable composition having a high viscosity is scattered, the adhesive force of the foamable composition with respect to the filaments is high and the filament distribution is relatively rough. Therefore there is great danger that the foamable composition will permanently fill gaps between the filaments. The foamable composition filling these gaps of the brush rolls is foamed and set within the gaps whereby the brush rolls are solidified into a cylindrical form and an effective scattering is impossible.

When the scattering rolls (14), (15) shown in Figure 3 are used, this trouble can be prevented. The latter scattering rolls have a relatively dense and thin fibrous layer on the surfaces thereof. The fibrous layer has fibers oriented in the radial direction as well as fibers arranged in the other directions. For example, the fibrous layer can be a relatively rough fabric, a net or a woven fabric which is wound on the roll or a rough string or rope which is wound in a spiral form on the roll. Preferably a fiber is used which does not adhere the foamable composition. In particularly, thick synthetic fibers and natural fibers are useful. For example, natural fibers include jute, manila hemp, sisal, hemp and hemp-palm.

The scattering roll shown in Figure 3 has a relatively high density. Therefore, the foamable composition will not easily enter any gaps between the fibers. Moreover, the fibrous layer is thin whereby the foamable composition put into the gaps under the pressure caused by contacting it with the spreading roll, is easily squeezed out. However, the scattering rolls have a relatively inferior effect for scattering the foamable composition in comparison with the brush rolls. Therefore, it is necessary to rotate them at a higher speed. The foamable composition having a high viscosity is easily adhered to the surface of the scattering rolls and is not easily detached from the surface whereby the particles of the foamable composition scattered out of the spreading apparatus are relatively increased and size of the particles is relatively larger. In order to overcome the disadvantage, it is suitable to use auxiliary scattering rolls (16), (17) shown in Figure 3. The particles of the foamable composition adhered on the auxiliary scattering rolls, are finely divided by centrifugal force and scattered in the scattering direction. A brush roll shown in Figures 1 and 2 is suitable as the auxiliary scattering roll.

In the apparatus of the present invention shown in Figures 1, 2 and 3, rotary speeds of the spreading rolls, the scattering rolls and the auxiliary scattering rolls, reciprocal speed of the nozzle, and size of the apparatus are not critical and can be selected depending upon quantity of the scattered foamable composition, and area and relative speed of the receiving surface. For example, when the foamable composition is spread on the moving receiving surface having a width of from about 50 cm to 2 m, to form a polyurethane foam having a thickness of from about 0.5 cm to 20 cm, the following condition is preferably selected. The length of each roll is substantially the same as the width of the receiving surface. The diameter of the roll is preferably from about 5 cm to about 50 cm. The gap between the pair of the spreading rolls is preferably less than 20 mm especially less than 10 mm. The thickness of the fibrous layer of the scattering rolls shown in Figure 3 is preferably less than 3 cm especially less than 1.5 cm. The rotary speed of the spreading roll is preferably greater than 200 r.p.m. especially greater than 500 r.p.m. The rotary speed of the scattering rolls is preferably greater than 500 r.p.m. especially greater than 1,000 r.p.m., usually about several thousands r.p.m. The reciprocal movement of the nozzle is preferably greater than 10 times per minutes especially greater than 30 times per minutes.

The thickness of the foamable composition scattered on the receiving surface depends upon the speed of the receiving surface and it becomes thinner with increasing speed of the receiving surface.

The spreading method of the present invention can be attained by employing an apparatus other than the apparatuses shown in Figures 1, 2 and 3. For example, the foamable composition can be distributed by using one spreading roll and spreading it on the spreading roll by a doctor-knife and scattering the spread foamable composition by one scattering roll. A surface of a belt such as endless belt can be used as the first surface instead of the surface of the roll. Two belts can be combined. One belt and one roll can be also combined. The first surface should be a movable surface on which a foamable composition can be spread in a constant thickness. The means for scattering the foamable composition on the first surface as fine particles of the foamable composition is preferably a roll having a fibrous layer on its surface, but it is not critical. For example, a nozzle having a linear gas outlet opening can be used. The foamable composition on the first surface can be scattered as fine particles by a high speed gas such as air discharged from the nozzle.

The time of scattering the foamable composition is the time when it is still foamable i.e. the cream time or the initial rise time. The control of the scattering time is attained by controlling the period from the formation of the foamable composition to the discharge from the nozzle or controlling the period from the feeding on the first surface to the scattering. The foamable composition discharged through the nozzle can be froth or non-froth.

The surface to be covered i.e. the receiving surface is not critical. It can be a continuous surface as a surface of a slab belt or arranged plates having uniform size as a slate waved sheet. The second surface can be a flat surface or a non-flat surface. The material can be a rigid surface such as a metal, a slate and wooden plate, and also a soft surface such as plastic film and cloth.

The advantage of the spreading method and the spreading apparatus of the present invention is to spread the foamable composition uniformly in the transverse direction of the receiving surface and to spread the foamable composition as fine particles. The spreading as fine particles leads to a uniform thin spread layer with a uniform thickness even though the object surface is not flat. For example, a slate waved plate having a waved surface in the forward direction or a waved surface in the transverse direction is used as the second surface. The foamable composition is deposited in a uniform thickness at the tops or the bottoms and also at the slant surfaces. The foamable composition is deposited as fine particles. The fine particles are floated in the form of mist in air. The falling velocity of the fine particles is relatively slow and the direction of the deposition is not limited to the perpenducular direction. The fine particles can be deposited on the slant surface not only from the perpendicular direction but also other directions. The deposited amount on the slant surface is not remarkably lower than that of the horizontal surface. Accordingly, a polyurethane foam layer having a constant thickness can be formed on the waved slate plate. The polyurethane foam layer having a constant thickness can be formed by freely foaming the deposited foamable composition. It is also possible to foam and set the deposited foamable composition under compression by a cover or a mold.

The method and the apparatus of the present invention are utilized for formation of a polyurethane foam by spreading the foamable composition for a polyurethane foam on the receiving surface and foaming and setting it on the receiving surface. The receiving surface can be a surface of a slab belt or an inner surface of a mold. In the former case, a continuous polyurethane foam slab is obtained. In the latter case, a polyurethane foam molded product is obtained.

When a surface of a rigid plate such as a slate waved sheet is used as the receiving surface and the spread foamable composition is freely foamed and set, a laminate having a polyurethane foam layer on one surface is obtained. When a receiving sheet is overlapped on the spread foamable composition on the receiving surface and the foamable composition is foamed and set, a sandwich plate having a middle layer of a polyurethane foam is obtained.

**Claims**

1. A method of spraying material onto a moving receiving surface via a moving intermediate surface, characterized in that the material is a foamable composition for forming

# 7    0016 836    8

a polyurethane foam, which is spread through a reciprocating nozzle onto the moving intermediate surface and thereafter, while still being foamable, removed from the intermediate surface and scattered onto the receiving surface by a brush throwing action.

2. A method according to claim 1, characterized in that the intermediate surface is a surface of a rotary roll.

3. A method according to claim 2, characterized in that the intermediate surface is formed by the surface of a pair of rolls which are arranged in parallel and which are rotated to move their facing surfaces downward.

4. A method according to claim 3, characterized in that the foamable composition fed onto the first surface is spread through a gap between the pair of rolls.

5. A method according to claim 1, characterized in that the step of scattering the foamable composition onto the receiving surface in the form of fine particles is carried out by using a roll having a fibrous layer which is rotated in contact with the intermediate surface.

6. A method according to claim 5, characterized in that the roll having the fibrous surface layer is a brush roll having many filaments which are arranged in the radial direction.

7. A method according to claim 5, characterized in that the roll having the fibrous surface layer is a roll having a relatively dense thin fibrous layer in which many fibers are arranged in random direction.

8. An apparatus for spraying a material onto a moving receiving surface comprising a pair of spreading rolls which are arranged in parallel and with a gap and with their facing surfaces rotating downwardly; a device for feeding the material onto the spreading rolls and a pair of scattering rolls (3, 4; 14,15) which are located below the spreading rolls and rotatable in contact with the spreading rolls, characterized in that the feed device comprises a reciprocatable nozzle for feeding the material, which is a foamable composition for forming a polyurethane foam, immediately after its formation onto the spreading rolls and that the scattering rolls have a fibrous surface layer.

9. An apparatus according to claim 8, characterized in that the scattering rolls (3, 4) are brush rolls having many filaments which are arranged in the radial direction.

10. An apparatus according to claim 8, characterized in that the scattering rolls (14, 15) have a relatively thin dense fibrous layer in which many fibers are arranged in random directions.

## Revendications

1. Procédé de pulvérisation d'un produit sur une surface réceptrice en mouvement par l'entremise d'une surface intermédiaire en mouvement, caractérisé en ce que le produit est une composition apte à mousser pour former une mousse de polyuréthane, qu'on étale à travers un ajutage à mouvement alternatif sur la surface intermédiaire en mouvement qu'on enlève ensuite, pendant que la matière est encore apte à mousser, de la surface intermédiaire et qu'on disperse sur la surface réceptrice par une action de projection à la brosse.

2. Procédé selon la revendication 1, caractérisé en ce que la surface intermédiaire est une surface d'un rouleau rotatif.

3. Procédé selon la revendication 2, caractérisé en ce que la surface intermédiaire est formée par la surface d'une paire de rouleaux qui sont montés en parallèle et qui sont entraînés en rotation de telle manière que leurs surfaces en regard soient déplacées vers le bas.

4. Procédé selon la revendication 3, caractérisé en ce que la composition moussable amenée sur la première surface est étalée à travers un interstice formé entre les deux rouleaux.

5. Procédé selon la revendication 1, caractérisé en ce que l'étape de disperson de la composition apte à mousser sur la surface réceptrice sous forme de fines particules est effectuée en utilisant un rouleau portant une couche fibreuse, qui est entraîné en rotation lors d'un contact avec la surface intermédiaire.

6. Procédé selon la revendication 5, caractérisé en ce que le rouleau portant la couche superficielle fibreuse est un rouleau-brosse comprenant de nombreux filaments orientés dans une direction radiale.

7. Procédé selon la revendication 5, caractérisé en ce que le rouleau portant la couche superficielle fibreuse est un rouleau présentant une couche fibreuse mince relativement dense dans laquelle de nombreuses fibres s'étendent dans des directions quelconques.

8. Appareil de pulvérisation d'un produit sur une surface réceptrice en mouvement, comprenant une paire de rouleaux d'étalement qui sont agencés en parallèle et définissent un interstice, leurs surfaces en regard étant entraînées en rotation vers le bas; un dispositif de distribution du produit sur les rouleaux d'étalement et une paire de rouleaux de dispersion (3, 4; 14, 15) qui sont disposés au-dessous des rouleaux d'étalement et sont mis en rotation lors d'un contact avec les rouleaux d'étalement, caractérisé en ce que le dispositif de distribution comprend un ajutage animé d'un mouvement alternatif pour distribuer le produit, qui est une composition apte à mousser pour former une mousse de polyuréthane, immédiatement après sa formation sur les rouleaux d'étalement et en ce que les rouleaux de dispersion présentent une couche superficielle fibreuse.

9. Appareil selon la revendication 8, caractérisé en ce que les rouleaux de dispersion (3, 4) sont des rouleaux-brosses comportant de nombreux filaments orientés dans une direction radiale.

10. Appareil selon la revendication 8, caractérisé en ce que les rouleaux de dispersion (14, 15) portent une couche fibreuse dense relativement mince dans laquelle de nombreuses fibres s'étendent dans des directions quelconques.

**Patentansprüche**

1. Verfahren zum Aufsprühen von Material auf eine sich bewegende Aufnahmefläche über eine sich bewegende Zwischenfläche, dadurch gekennzeichnet, daß das Material eine schäumbare Masse zur Bildung eines Polyurethanschaums ist, welche durch eine hin- und herbewegte Düse auf der sich bewegenden Zwischenfläche verteilt wird, worauf sie im noch schäumbaren Zustand durch Bürstenschleuderwirkung von der Zwischenfläche entfernt und auf der Aufnahmefläche verteilt wird.

2. Verfahren nach Anspruch 1, dadurch gekennzeichnet, daß die Zwischenfläche eine Fläche einer rotierenden Walze ist.

3. Verfahren nach Anspruch 2, dadurch gekennzeichnet, daß die Zwischenfläche durch die Fläche eines Walzenpaares gebildet wird, welche parallel zueinander angeordnet sind und welche derart rotieren, daß sich ihre einander zugewandten flächen abwärts bewegen.

4. Verfahren nach Anspruch 3, dadurch gekennzeichnet, daß die auf die erste Oberfläche aufgebrachte schäumbare Masse durch einen Spalt zwischen dem Walzenpaar verteilt wird.

5. Verfahren nach Anspruch 1, dadurch gekennzeichnet, daß die Stufe der Verteilung der schäumbaren Masse auf die aufnahmefläche in Form feiner Teilchen durchgeführt wird unter Verwendung einer Walze mit einer faserigen Schicht, welche in Kontakt mit der Zwischenfläche rotiert.

6. Verfahren nach Anspruch 5, dadurch gekennzeichnet, daß die Walze mit der faserigen Oberflächenschicht eine Bürstenwalze mit einer Vielzahl von Filamenten ist, die in radialer Richtung angeordnet sind.

7. Verfahren nach Anspruch 5, dadurch gekennzeichnet, daß die Walze mit der faserigen Oberflächenschicht eine Walze mit einer relativ dichten, dünnen, faserigen Schicht ist, in der eine Vielzahl von Fasern ungeordnet liegen.

8. Vorrichtung zum Verteilen eines Materials auf einer sich bewegenden Aufnahmefläche mit einem Paar von Verteilungswalzen, welche parallel zueinander und mit einem Spalt angeordnet sind, wobei ihre sich gegenüberliegenden Flächen sich abwärts bewegen; mit einer Vorrichtung zum Aufbringen des Materials auf die Verteilungswalzen und mit einem Paar von Spritzwalzen (3, 4; 14, 15), welche unterhalb der Verteilungswalzen angeordnet sind und im Kontakt mit den Verteilungswalzen drehbar sind, dadurch gekennzeichnet, daß die Einrichtung zum Aufbringen des Material auf die Verteilungswalzen eine hin- und herbewegbare Düse ist, welche eine schäumbare Masse zur Bildung eines Polyurethanschaums unmittelbar nach deren Bildung auf die Verteilungswalzen aufträgt und daß die Spritzwalzen eine faserige Oberflächenschicht aufweisen.

9. Einrichtung nach Anspruch 8, dadurch gekennzeichnet, daß die Spritzwalzen (3, 4) Bürstenwalzen sind mit einer Vielzahl von in radialer Richtung angeordneten Filamenten.

10. Einrichtung nach Anspruch 8, dadurch gekennzeichnet, daß die Spritzwalzen (14, 15) eine relativ dünne, dichte, faserige Schicht aufweisen, in der eine Vielzahl von Fasern in wahlloser Ausrichtung angeordnet sind.

# F I G. I

# F I G. 2

**0016836**

# FIG. 3